# EUROPEAN PATENT SPECIFICATION

(11) **EP 2 531 444 B1**
(45) Date of publication and mention of the grant of the patent: **11.09.2019**
(21) Application number: 10704277.2
(22) Date of filing: 05.02.2010
(51) Int. Cl.: C01B 11/02

(54) **SYSTEM AND METHOD FOR GENERATING CHLORINE DIOXIDE**
SYSTEM UND VERFAHREN ZUR ERZEUGUNG VON CHLORDIOXID
SYSTÈME ET PROCÉDÉ DE GÉNÉRATION DE DIOXYDE DE CHLORE

(43) Date of publication of application: 12.12.2012
(73) Proprietor: Sipka Inc., Edison, NJ 08820 (US)
(72) Inventor: THANGARAJ, John, Appadurai, Edison NJ 08820 (US)
(74) Representative: Cawley, Aimee Elizabeth
(86) International application number: PCT/US2010/023278
(87) International publication number: WO 2011/096930

(56) References cited:
- EP-A2- 0 423 817
- WO-A2-2006/055361
- JP-A- 2000 211 901
- US-A- 4 689 169
- US-A1- 2006 169 949

## Description

### Field of the Invention

The present invention relates generally to chlorine dioxide, and more particularly to a system and method for generating gases and solutions containing free chlorine dioxide.

### Background of the Invention

Chlorine dioxide (ClO₂) is a highly reactive yellowish-green gas molecule. Highly soluble in water, ClO₂ is used in a variety of applications, such as for pulp-bleaching, as a bactericide, a viricide, an algaecide, a fungicide, a potent antimicrobial agent and a selective oxidizer. Chlorine dioxide is an effective antimicrobial even at very low concentrations and over wide range of pH.

Recently, gaseous ClO₂ has successfully been used to decontaminate areas of the Hart Senate Office Building and the Brentwood postal sorting facility in Washington, D.C. that were contaminated with B. anthracis. ClO₂ gas effectively reduces Bacillus spores on paper, plastic, epoxy-coated stainless steel, and wood surfaces.

Chlorine dioxide is particularly usefully for removing and preventing the formation of a biofilm, which is a layer of microorganisms contained in a matrix (slime layer). Biofilms, which form on surfaces in contact with water, protect pathogens living therein from concentrations of biocides that would otherwise kill or inhibit those organisms if freely suspended in water. For example, biofilms provide a safe haven for organisms like Listeria, E. coli and legionella. In the biofilm, these organisms can reproduce to levels where contamination of products passing through that water becomes inevitable. To that end, chlorine dioxide is used to treat and prevent the formation of biofilms in drinking water facilities and cooling towers. In addition to the health-safety issue, removal and prevention of biofilms equates to higher heat exchange efficiency, longer rotating equipment (*e*.*g*., pumps, *etc*.) lifetime, and lower maintenance costs.

Chlorine dioxide is typically produced commercially from aqueous solutions of chlorite-containing salts. See, for example, U.S. Pat. No. 5,009,875 and Ullmann's Encyclopedia of Industrial Chemistry, vol. A 6, p. 496-500. Various agents are used to generate or release chlorine dioxide. See, for example, U.S. Pats. Nos. 2,309,457, 2,043,284 4,019,983, 4,013,761, 4,806,215, 4,129,484 4,247,531, 6,967,010, 5,478,446, 5,258,171, and 6,967,010.

A significant drawback to using chlorine dioxide is that it is explosive in gaseous concentrations of about 10 volume percent [ClO₂/air]. As a consequence, chlorine dioxide is typically produced at the point-of-use via expensive generators that are operated by skilled professionals.

Although historically used in large-scale applications, chlorine dioxide has more recently been used for small-scale applications. As a consequence, the thrust of new chlorine dioxide technologies is for safer generation of high quality ClO₂ gas in relatively small quantities.

U.S. Pat. No. 6,238,643 discloses methods for producing an aqueous solution of chlorine dioxide by reacting a metal chlorite and an acid-forming component. The reactants are very stable and do not react to produce chlorine dioxide in the absence of water. Before use, the reactants are separated from liquid water by a membrane (*i*.*e*., a Tyvek® bag/sachet). The membrane permits controlled passage of liquid water and/or water vapor. Chlorine dioxide is generated when water passes through the membrane. The chlorine dioxide that is generated passes out through the membrane into liquid water to produce the desired aqueous chlorine dioxide solution.

A major disadvantage of this approach is that when the sachet/bag is placed in water, it generates ClO₂ at a rate that is greater than the rate at which ClO₂ permeates out of the sachet. As a consequence, the sachet expands/inflates, and a high concentration of ClO₂ gas can result inside the sachet, creating an explosion hazard.

U.S. Pats. Nos. 6,432,322, 6,699,404 and 7,182,883 disclose tablets for generating highly-converted solutions of chlorine dioxide rapidly and safely. These tablets comprise of sodium chlorite, dry solid-acid sources, desiccating and filling agents such as calcium chloride and magnesium chloride, and a dichlorocyanuric acid of sodium salt (NaDCC). NaDCC is added to enhance the yield of chlorine dioxide.

Tablets generally produce chlorine dioxide at a greater rate than membrane devices because the tablet does not have a membrane to restrict chlorine dioxide from escaping into solution. But the quality of the resulting ClO₂ is questionable because unconverted reagents are present along with the ClO₂. Furthermore, for many applications, the presence of NaDCC with the generated ClO₂ is undesirable. But without the NaDCC, less chlorine dioxide is generated.

U.S. Pat. No. 5,091,107 discloses methods and devices for the production of controlled quantities of chlorine dioxide at concentrations that are effective for use as a deodorant or germicide. Aqueous chlorite compositions such as aqueous sodium chlorite are brought into contact, at a controlled rate via capillary means (*e*.*g*., a wick), with an absorbent pad containing acid or other reactant that will react with the chlorite to form chlorine dioxide.

U.S. Pat. No. 6,764,661 discloses a device for producing an aqueous chlorine dioxide solution when placed in water. The device includes a membrane shell that defines a compartment. The compartment includes one or more dry chemicals (*e*.*g*., a metal chlorite and an acid) that are capable of producing chlorine dioxide gas when exposed to water. A wick extends into the compartment for absorbing water and transporting water into the compartment so that the chemical(s) in the compartment dissolve in the water and produce chlorine dioxide. In some embodiments, the device comprises a Tyvek® pouch that is filled with ClO₂ release materials and having a wick. But as previously noted, the Tyvek pouch has limitations related to safety wherein a high concentration of gas can build in the pouch, inflating it, and creating an explosion hazard.

U.S. Publ. Pat. Application 2009/0142235 discloses a disinfectant-generating device that includes a membrane shell. The membrane shell defines at least two compartments, each of which includes at least one dry reactant capable of reacting and producing a disinfectant upon exposure of the device to water or ambient moisture. Each compartment is provided with an outer membrane defining walls of the device, an inner membrane providing physical separation of the dry reactants, and a wick.

U.S. Pat. Nos. 5,974,810, 6,077,495, 6,294,108, 7,220,367 disclose methods, compositions and systems for generating chlorine dioxide gas in a controlled-release manner. According to the patents, the gas is generated by combining at least one metal chlorite and a dry solid hydrophilic material that reacts with the metal chlorite in the presence of water vapor, but not in the absence of water (liquid or vapor), to produce chlorine dioxide gas in a sustained amount of about 0.001 to 1,000 ppm.

In general, the prior-art devices and methods discussed above use membranes that render them susceptible to premature activation by water or water vapor. This results in a reduced shelf life unless sufficient steps, such as providing an air-tight foil seal, are taken to prevent exposure to ambient moisture or water. But even when such a seal is used, after a few months of storage, the foils tend to crack and lose their seal.

US 4689169 discloses a dry composition for the sustained, controlled production of gaseous chlorine dioxide comprising a dry, inert diluent; a metal chlorite selected from alkali metal chlorites and alkaline earth metal chlorites; and a dry agent capable of reacting with a metal chlorite in the dry state to produce chlorine dioxide, the agent being selected from the group consisting of dry oxidizing agents and dry acids.

US 2006/0169949 discloses a massive body, e.g. a tablet, for producing a thickened solution of chlorine dioxide when the massive body is added to liquid water. The massive body comprises a metal chlorite, an acid source and a thickener (either incorporated directly into the massive body or added as a component separate from the massive body) and optionally a source of free halogen.

A need therefore remains for a need for simple, convenient and safe system and method with a long shelf life for generating ClO₂ gas or solutions at high yield and with high quality.

### Summary of the Invention

According to a first aspect of the present invention there is provided a chlorine-dioxide-generating composition comprising:
(i) an alkali metal chlorite salt in an amount in a range of 1 to 80 weight percent;
(ii)a solid acid source in an amount in a range of 2 to 80 weight percent;
(iii) hydrophilic cellulose in an amount in a range of 7 to 50 weight percent; and
(iv) a super absorbent compound in an amount of 8 to 50 weight percent.

According to a second aspect of the invention there is provided a canister which contains a composition as defined for the first aspect of the invention, wherein the canister comprises at least one porous region that is characterized by a size in the range of 0.853 mm (20 mesh) to 0.044 mm (325 mesh).

According to a third aspect of the invention there is provided a method comprising:
preparing a chlorine-dioxide-generating composition, wherein the composition comprises:
(i) an alkali metal chlorite salt in an amount In a range of 1 to 80 weight percent;
(ii) a solid acid source in an amount in a range of 2 to 80 weight percent;
(iii) hydrophilic in an amount in a range of 7 to 50 weight percent;
(iv) a super absorbent compound in an amount in a range of 8 to 50 weight percent; and
adding the chlorine-dioxide generating composition to a canister, wherein the canister comprises a first porous region and a second porous region that:
(a) each place an exterior of the canister in fluidic communication with an interior of the canister; and
(b) are characterized by a size in a range of 0.853 mm (20 mesh) to 0.044 mm (325 mesh).

The present invention provides a system and method for generating chlorine dioxide that avoids some of the drawbacks and costs of the prior art. The system and method use chlorine-dioxide-generating ("CDG") compositions. The CDG compositions comprise an alkali chlorite salt, acid, hydrophilic cellulose, a "super absorbent," and optionally a surfactant.

In accordance with the illustrative embodiment of the present invention, a canister having porous regions contains a CDG composition in the form of a pre-mixed dry powder. The porous regions of the canister permit entry of solvent, such as, without limitation, water vapor/liquid water, water vapor, wet air, alcohol, and the like. The solvent primarily functions to bring the active ingredients- base (e.g., -NaClO₂) and acid- together. The solvent essentially controls the rate of chlorine dioxide generation. Water (liquid or vapor) is the preferred solvent. And solvents that donate a proton are generally preferable to organic solvents. The solvent should not react with the alkali chlorite salt, acid reactants, nor chlorine dioxide product.

The super absorbent compound (e.g., high molecular weight polyacrylate, crosslinked carboxymethylcellulose derivatives, etc.) controls access of the solvent to the active ingredients. In the absence of super absorbent compounds (or, for some applications, the absence of other highly hydrophilic compounds, such as some types of cellulose), the CDG composition is not stable; that is, ClO₂ is generated immediately.

The porous regions of the canister also permit the resulting ClO₂ gas or solution to exit the canister. The porosity of the canister is sufficient to prevent a buildup of ClO₂ within the canister. In other words, chlorine dioxide is able to exit the canister at a rate that is at least as great as the rate at which it is generated within the canister. Furthermore, the small "openings" in the canister that define the porous region are small enough to retain the granulated/powered components of the CDG composition.

In some embodiments, the canisters include a body and removable (e.g., screw on, press on, etc.) top and/or bottom lids. In some embodiments, the canister is rigid/non-expandable. In some further embodiments, the canister is flexible/expandable. The use of removable lids facilitates re-use of the canister, allowing the canister to be refilled with CDG compositions after each charge thereof is spent. In
some embodiments, a portion of one or both of the lids is porous. In some other embodiments, the body of the canister incorporates one or more porous region(s). In some further embodiments, substantially all of the surface of the canister is porous. In accordance with the illustrative embodiment, the porous region(s) comprise a mesh.

The canisters disclosed herein effectively function as a reactor that is capable of generating chlorine dioxide gas or solution. When the canister is immersed in an appropriate solvent, a chlorine dioxide solution results. When the canister is not fully immersed in liquid, chlorine dioxide gas is released into the surrounding space.

Using a canister and CDG compositions in accordance with the illustrative embodiment, a ClO₂ solution having a neutral pH (*i*.*e*., 6.4-7.0) is generated with concentrations of chlorine dioxide in the range of about 0.01 to 100,000 ppm. Based on canister design (*e*.*g*., mesh size, internals, *etc*.), CDG composition, use of a dessicant, among any other parameters, the rate of ClO₂ gas generation or its timing can be controlled. For example, the ClO₂ gas can be generated for (i) immediate, (ii) delayed, or (iii) controlled release when exposed to water vapor/water/solvent, *etc*., at ambient conditions.

Due to mesh-like regions of the canister, which prevent a build-up of ClO₂, the explosion danger presented by Tyvek® sachets is eliminated. Canisters containing CDG compositions as described herein provide a shelf life as long as several years, which is far longer than is achieved in the prior art.

### Brief Description of the Drawings

FIG. 1 depicts a first embodiment of a canister for use in conjunction with the illustrative embodiment of the present invention.
FIG. 2 depicts a second embodiment of a canister for use in conjunction with the illustrative embodiment of the present invention.
FIG. 3 depicts a third embodiment of a canister for use in conjunction with the illustrative embodiment of the present invention.
FIG. 4 depicts a fourth embodiment of a canister for use in conjunction with the illustrative embodiment of the present invention.
FIG. 5 depicts a first implementation of a mesh for use in conjunction with the illustrative embodiment of the present invention.
FIG. 6 depicts a second implementation of a mesh for use in conjunction with the illustrative embodiment of the present invention.
FIG. 7 depicts an alternative embodiment of the canister of FIG. 2, wherein the canister includes a cartridge with discrete compartments.
FIG. 8 depicts an alternative embodiment of the canister of FIG. 1, wherein the canister includes a cartridge with discrete compartments.

### Detailed Description

The system and method disclosed herein generate chlorine dioxide by exposing chlorine-dioxide-generating ("CDG") compositions to a solvent, such as water vapor, wet air, liquid water, or solvents of any pH, such as alcohols (e.g., ethanol, isopropyl alcohol, etc.), as described by the following reaction :

NaClO₂ + H<+>→ ClO₂ [1]

In some embodiments, the CDG composition comprises a dry powder including (a) active ingredients, (b) required inert ingredients, and (c) optional inert ingredients.

The active ingredients, which include alkali chlorite salt and acid, are preferably present in an amount within the range of about 3 to about 85 weight percent of the CDG composition.

Required inert ingredients include super absorbents and hydrophilic cellulose . In the absence of these hydrophilic compounds, the CDG composition is not stable; that is, ClO₂ is generated immediately. These required inert ingredients are present in the CDG composition in an amount of at least about 15 weight percent. A desiccant may also be present.

Optional inert ingredients, which include hydrophobic compounds, diluents, surfactants, etc., are optionally present in the CDG composition at any amount.

In some preferred embodiments, the CDG composition comprises:

| | |
|---|---|
| • alkali chlorite salt: | about 20 to about 35 weight percent of the CDG composition; |
| • acid : | about 25 to about 40 weight percent of the CDG composition; |
| • cellulose/super absorbent/desiccant: | about 55 to about 25 weight percent of the CDG composition. |

In some other preferred embodiments, the CDG composition comprises:

| | |
|---|---|
| • alkali chlorite salt: | about 20 to about 35 weight percent of the CDG composition; |
| • acid : | about 25 to about 40 weight percent of the CDG composition; |
| • cellulose/super absorbent/desiccant: | about 54 to about 20 weight percent of the CDG composition; |
| • surfactant: | about 1 to about 5 weight percent of the CDG composition. |

In some additional preferred embodiments, the CDG composition comprises:

| | |
|---|---|
| • alkali chlorite salt: | about 20 to about 35 weight percent of the CDG composition; |
| • acid : | about 25 to about 40 weight percent of the CDG composition; |
| • cellulose/super absorbent/desiccant: | about 15 to about 25 weight percent of the CDG composition; |
| • diluents: | about 10 to about 40 weight percent of the CDG composition. |

In applications in which the CDG composition (and canister) is immersed in water, the total amount of super absorbent compound and (hydrophilic) cellulose is preferably at least about 20 weight percent of the CDG composition, and more preferably at least 25 weight percent of the CDG composition, as a function of the desired delay of chlorine dioxide release.

Suitable alkali chlorite salts include, without limitation, sodium chlorite, potassium chlorite, and lithium chlorite.

Suitable solid acids include, without limitation, citric acid, mono and di- sodium citrate, sodium hydrogen sulfate, sodium di-hydrogen and mono-hydrogen phosphates, tetra-sodium etidronate (tetra-sodium (1-hydroxyethylidene) bisphosphates, poly(acrylic acid) partial sodium salt, poly(acrylic acid) partial potassium salt, and acid-impregnated inorganic solids.

Suitable cellulosic agents include, without limitation, hydroxy methyl, ethyl and propyl cellulose and methocelE15 premium (hypromellose 2910), microcystalline cellulose.

Super absorbents suitable for use in conjunction with the present invention exhibit the following characteristics: (1) they have a very high solvent- (e.g., water, etc.) absorbing capability (preferably, but not necessarily, capable of adsorbing at least 50 times its weight in solvent; (2) they have an appropriately slow solvent release property; and (3) they do not react with the active ingredients. Suitable super absorbents include, without limitation, crosslinked polyacrylic acid salts, crosslinked isobutylene-maleic acid copolymer derivatives, crosslinked starch-polyacrylic acid salts, crosslinked polyvinyl alcohol-polyacrylic acid salts, cross-linked polyvinyl alcohol derivatives, crosslinked polyethylene glycol derivatives and crosslinked carboxymethylcellulose derivatives.

A particularly preferred super absorbent is sodium polyacrylate having a molecular weight at or above about 5000 grams/mol, preferably above 70,000 grams/mol, and more preferably within a range of about 125,000 to about 250,000 grams/mol. Another particularly preferred super absorbent is sodium polyacrylamide having a molecular weight of at least 400. Also preferred are sodium salts of polyacrylic acid (solvent absorption increases as more acid groups are exchanged with sodium). Other super absorbents include certain starch super-absorbent polymers having a molecular weight of at least about 500 grams/mole, and clays, such as inorganic Pillard clays, and silica. The molecular weight values referenced above are "weight average" molecular weight.

As used herein, the phrase "high molecular weight," when used to modify a compound (e.g., high molecular weight sodium polyacrylate, etc.) means a super absorbent form of the compound. This is to be distinguished from a non-super absorbent form of the compound, which will have a lower molecular weight.
Furthermore, the term "super absorbent compound" means a compound that absorbs at least 75 times its weight in solvent (e.g., water, etc.).

In some other embodiments, the chlorine-dioxide release materials further comprises surfactants. The presence of the surfactant results in the formation of a soapy chlorine-dioxide solution. If present, the surfactants are typically present in an amount up to about 70 weight percent of the CDG composition.

Suitable surfactants include those that do not react with chlorine dioxide or interfere with its release. Anionic surfactants are generally suitable for use in the solid compositions disclosed herein because, for the most part, they do not react with chlorine dioxide or interfere with its release. Examples include, without limitation, SLS (sodium dodecyl sulfate), sodium laureth sulfate, alkyl sulfonates such as 1-pentane sulfonic acid sodium salt monohydrate, 1-hexane sulfonic acid sodium salt monohydrate, 1-heptane sulfonic acid sodium salt monohydrate, 1-octane sulfonic acid sodium salt, 1- decane sulfonic acid sodium salt, sodium dodecyl benzene sulfonate, linear alkyl benzene sulfonate, sodium alkyl naphthalene sulfonate. Suitable non-ionic surfactants include alkyl poly (ethylene oxide), and more specifically polyethylene oxide. Cationic and zwitterionic surfactants are also suitable for use in conjunction with the illustrative embodiment of the present invention.

Other embodiments of CDG compositions suitable (although less so) for use in conjunction with the illustrative embodiment of the present invention are disclosed in U.S. Publ. Pat. Appl. 2008/0067470. It is notable that some of the compositions disclosed in U.S. Publ. Pat. Appl. 2008/0067470 include polyacrylate and forms thereof. Those polyacrylates were not of sufficiently high molecular weight to be characterized as "super absorbent," such as the polyacrylates used in the CDG compositions disclosed herein. The relevance there of the selection of relatively lower molecular weight polyacrylates (less than about 4000 grams/mol) versus the higher molecular polyacrylates of the present compositions is that the former compounds have relatively greater solubility in water. It is desirable for the compositions disclosed in U.S. Publ. Pat. Appl. 2008/0067470, in particular those that are intended to be "sprinkled" directly into water, to quickly solubilize.

Although they are relatively more soluble in water, relatively lower molecular weight polyacrylates have significantly less of an ability to adsorb water than high molecular weight polyacrylates. The lower molecular polyacrylates are not super absorbers and, therefore, are less desirable for use in the compositions disclosed herein. The relatively high-molecular-weight, super-absorbent polyacrylates used in compositions disclosed herein have a relatively lower solubility, and, as such, are not used in the compositions disclosed in U.S. Publ. Pat. Appl. 2008/0067470. But in the compositions described herein, it is water-absorption capability, rather than water solubility, that is of primary importance. It is also notable that the high-molecular-weight polyacrylates are less expensive than low molecular weight polyacrylates. As a consequence, the compositions disclosed herein are more attractive from a commercial perspective than those disclosed in U.S. Publ. Pat. Appl. 2008/0067470.

In accordance with the illustrative embodiment, a CDG composition, as described above, is added to a canister such as described herein and depicted in the accompanying Figures. The canisters depicted in the Figures are provided by way of illustration, not limitation. In conjunction with this disclosure, those skilled in the art will be able to design and fabricate canisters having different shapes and sizes, as a function of application specifics. In some embodiments, the canisters are commercially-available desiccant canisters. All canisters suitable for use in conjunction with the illustrative embodiment of the present invention will, however, incorporate one or more porous regions as described further below.

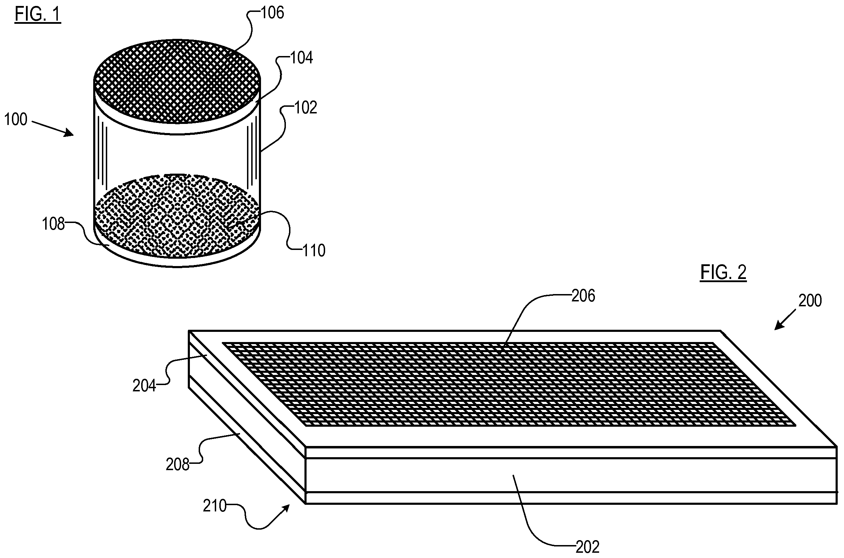

FIG. 1 depicts canister **100.** This canister comprises cylindrical body **102**, and removable lids **104** and **108**. In the embodiment of canister **100** depicted in FIG. 1, the major surface of upper lid **104** comprises mesh **106** and the major surface of lower lid **108** comprises mesh **110**. In some embodiments, meshes **106** and **110** comprise only a portion of the major surface of each lid. In some additional embodiments, only upper lid **104** comprises a mesh region. In yet some further embodiments, only one of upper lid **104** or lower lid **106** is removable.

FIG. 2 depicts canister **200**. This canister has a rectangular form factor and includes body **202** and lids **204** and **208**. In the embodiment of canister **200** depicted in FIG. 2, the major surface of upper lid **204** comprises mesh **206** and the major surface (not depicted) of lower lid **208** comprises mesh **210** (not depicted for clarity). In the embodiment of canister **200** depicted in FIG. 2, mesh **206** comprises only a portion of the major surface of upper lid **204**. In some embodiments, only upper lid **204** comprises a mesh region. And in yet some further embodiments, only one of upper lid **204** or lower lid **206** is removable.

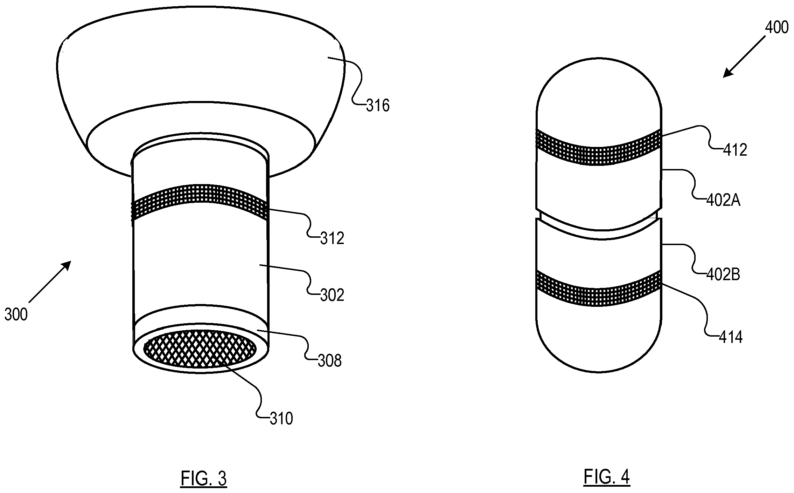

FIG. 3 depicts canister **300**. This canister includes float cap **316**, which adapts it for use in a swimming pool, *etc.* The canister includes cylindrical body **302**, which includes integral mesh **312**. Canister **300** further includes bottom lid **308** having mesh **310**. In the embodiment depicted in FIG. 3, lid **308** is removable. In some embodiments, float cap **316** is removable. In some embodiments in which float cap **316** is removable, removing the cap provides access to the interior of body **302**.

FIG. 4 depicts canister **400**. This canister, which has a "capsule" shape, comprises two complementary mating portions **402A** and **402B**. In the illustrative embodiment, portion **402A** comprises mesh **412** and portion **402B** comprises mesh **414**. In some alternative embodiments, mesh is present at different regions of portions **402A** and **402B**. For example, in some embodiments (not depicted), the hemispherical end of each portion **402A** and **402B** comprise mesh.

In some alternative embodiments, a substantially greater portion of canisters **100**, **200**, **300**, or **400** are mesh. For example, in some embodiments, all of body **102** of canister **100** and body **202** of canister **200** comprise mesh. In some embodiments of canister **300**, the full surface of body **302** is mesh. And in some embodiments, the full surface of capsule-shape canister **400** comprises mesh.

Canisters **100** through **400** (hereinafter collectively "the canisters") are formed from materials that are inert with respect to the CDG compositions they are intended to contain. For example and without limitation, the canisters are formed from polymers, metals, ceramics, clay, paper, wood or combinations thereof. Regarding polymers, canisters are preferably, but not necessarily, formed from polyethylene, polypropylene, and plastics (*e.g*., Formica®, polytetrafluoroethylene, nylon, synthetic rubber, and polyvinyl chloride).

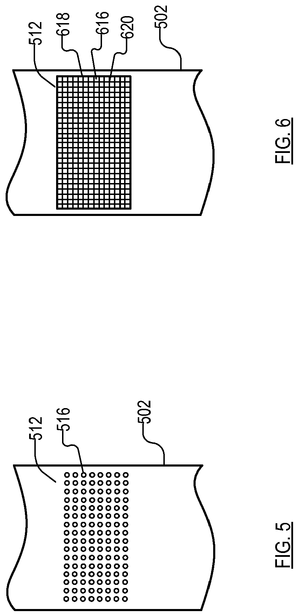

In some embodiments, the mesh comprises an array of openings. In the embodiment depicted in FIG. 5 for example, mesh **512** is created by forming an array of openings **516** in body **502** of a canister. In some other embodiments, a portion of the canister is removed and replaced by a mesh insert. Such an embodiment is depicted in FIG. 6, wherein mesh **512** comprises a mesh insert that is formed from a plurality of wires **620** of an appropriate material, which are held in place within frame **618**. Openings **616** are formed between crisscrossing wires **620**.

The mesh, however implemented, is appropriately sized to (1) retain CDG materials within the canister and (2) permit the movement of water, *etc.,* into the canister and ClO₂ to migrate out of the canister with no build up of gases. As used herein, the term "**mesh size**" references a typical laboratory sieve series, as shown in Table I below, and indicates that the mesh will retain particles that are screened greater (larger) than that particular mesh. It has been found that a mesh size within the range of about 20 to 325 is suitable for the aforementioned purposes. More preferably, mesh size is within the range of about 40 to 100.

**Table I: Mesh Size vs. Sieve Size**

| MESH SIZE | SIEVE SIZE OPENING (MM) |
|---|---|
| 20 | 0.853 |
| 40 | 0.422 |
| 50 | 0.297 |
| 60 | 0.251 |
| 70 | 0.211 |
| 80 | 0.178 |
| 100 | 0.152 |
| 200 | 0.075 |
| 325 | 0.044 |

To prepare a canister for use, the lid, *etc.,* is removed, CDG composition is added and then the lid is re-secured. Typically, the CDG composition is added until the canister is at least about half full, although the canister can function effectively to produce ClO₂ whether it is nearly empty or completely full. The main consideration in this regard is the amount of chlorine dioxide to be produced. The most efficient approach is therefore to provide a canister that, when completely filled with CDG composition, provides chlorine dioxide in a desired concentration for a desired amount of time.

### Operational Considerations.

*Exposing CDG to Solvent.* As previously discussed, in accordance with the illustrative embodiment, chlorine dioxide is generated from the dry powder/granular CDG composition in the presence of a solvent, which is preferably liquid water or water vapor. The rate of ClO₂ generation can therefore be altered by controlling exposure of the CDG composition access to the solvent. There are several ways to do this, including, for example:
(1) Altering mesh size;
(2) Altering the compounds or amounts thereof in the CDG composition;
(3) Adding a dessicant; and
(4) Altering the structure of the canister.

(1) *Mesh Size.* In general, a mesh having relatively larger openings results in an increase in the rate at which chlorine dioxide is produced. And the greater the rate of chlorine-dioxide production, the lower the yield thereof. For example, in some experiments, a change in mesh size from 50 to 20 (*see* Table I, above) resulted in a 30-percent reduction in ClO₂ yield.
(2) *CDG Composition.* First, the super absorbent compounds and suitable hydrophilic cellulose compounds used herein form a gel when they absorb solvent. The presence of the gel limits the ability of the water, *etc*., to access the active ClO₂ generating components (*i*.*e*., alkali chlorite salt and acid). It is believed that the gel actually supplies the water, *etc.,* to support the ClO₂ reaction. As a consequence, by varying the amount of super absorbent compounds or cellulose in the CDG composition, the rate (and yield) of chlorine dioxide generation can be controlled. Furthermore, altering the amount of super absorbent compounds or cellulose in the CDG composition can delay the onset of chlorine dioxide generation.
   Second, reaction rate can be altered (*i*.*e*., decreased) by increasing the separation of the active ClO₂-generating components (*i*.*e*., diluting them) with inert materials such as, without limitation, sodium chloride, sodium sulfate, silica, clay, and the like. Cellulose and polyacrylates can serve as diluents as well.
(3) *Use of Dessicants.* For applications involving exposure to water vapor, as opposed to liquid water, a dessicant can be incorporated into the CDG composition, or used in conjunction therewith, within the canister. The desiccant will absorb moisture, therefore acting to delay the release of ClO₂ gas. Any of a variety of commercially-available desiccants can be used for this purpose, including, without limitation, silica gel, molecular sieves, calcium or magnesium oxides, and chlorides.
   Consider, for example, a canister containing CDG composition and desiccant, in accordance with the present teachings. The canister is contained in packaging that contains, for example, shoes. The desiccant can provides the following functionality:
   - In applications in which humidity will be present, the desiccant protects against the premature release of chlorine dioxide. In particular, in the presence of humidity, the desiccant will absorb water molecules to its capacity, preventing the growth of mold on, for example, the shoes. Once the desiccant is fully saturated, water will be available for ClO₂ release. The ClO₂ gas will then control mold or other bacterial growth on the shoes (or in any storage space).
   - In the absence of humidity, the presence of the desiccant will extend the storage life of the canisters (that is, prevent any reaction of the CDG composition).
   - The desiccant prevents release of ClO₂ in case of accidental exposure to water vapor, *etc.*
(4) *Canister Structure.* For some applications, the use of internal compartments in the canisters can moderate the rate at which ClO₂ gas is generated. This reduces the risk of explosion and increases ClO₂ yield. Compartmentalization is particularly useful for this purpose when canister size and the charge of CDG composition increase. For example, although compartmentalization is usually of limited benefit for charges of CDG composition of less than about 50 grams, it can of significant benefit for charges of 500 grams or more.

Furthermore, the charge of CDG composition at which compartmentalization becomes advantageous is a function of the form factor of the canister. For example, the benefits of compartmentalization will be realized for a relatively smaller charge of CDG composition in canisters having a relatively greater height/width ratio. In this regard, consider the form factor of canisters **100**, **300**, and **400** on the one hand (relatively greater height/width ratio) versus canister **200** on the other hand (relatively smaller height/width ratio). Canisters **100**, **300**, and **400** are therefore expected to benefit from compartmentalization at smaller charges of CDG composition than canister **200**.

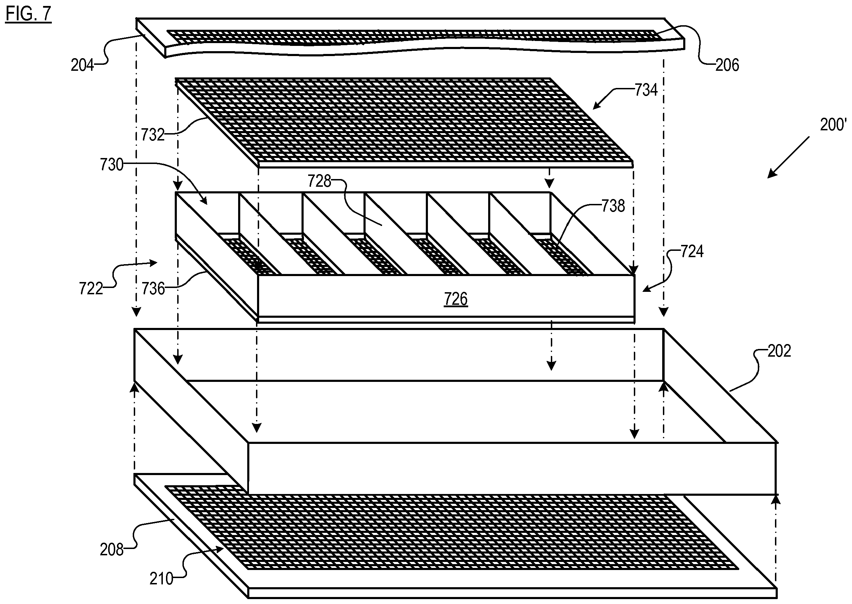

FIG. 7 depicts canister **200'**, which is similar to canister **200** of FIG. 2, but further includes multi-compartment cartridge **722**. Canister **200'** includes body **202,** upper lid **204** comprising mesh **206**, and lower lid **208** comprising mesh **210**. Cartridge **722** comprises body **726**, partitions **728**, upper lid **732**, and lower lid **736**, interrelated as depicted. Partitions **728** define a plurality of compartments **730**. Upper lid **732** comprises mesh **734** and lower lid **736** comprises mesh **738**. In this embodiment, the mesh covers the full extent of the lids. In some embodiments, internal partitions **728** and/or body **726** are porous (*i*.*e*., comprises mesh), as well.

In the illustrative embodiment, cartridge **722** is sized to leave a gap between the sidewalls of body **726** of the cartridge and the walls of canister body **202**. As a consequence, standoffs, *etc*., should be used to fix cartridge **722** in place within body **202**.

A CDG composition is added to cartridge **722**. One or both of upper lid **732** and lower lid **736** are removable for that purpose. As desired, CDG composition can be added to all of the compartments. In some embodiments, CDG composition is added to some of compartments **730** and a desiccant is added to other compartments **730** (*e*.*g*., in alternating fashion, *etc.)* In some other embodiments, desiccant is added to the regioin between the inside walls of canister body **202** and outside of cartridge **722**. This creates a "moat" of desiccant around cartridge **722**.

In some other embodiments, the CDG composition itself can be partitioned, wherein chlorite, polyacrylate, and cellulose is disposed in some compartments and the solid acid is disposed in other compartments. In such embodiments, partitions **730** must be porous.

In some other embodiments, body **202** includes interior partition walls (not depicted), which serve to compartmentalize body **202** without requiring a discrete cartridge.

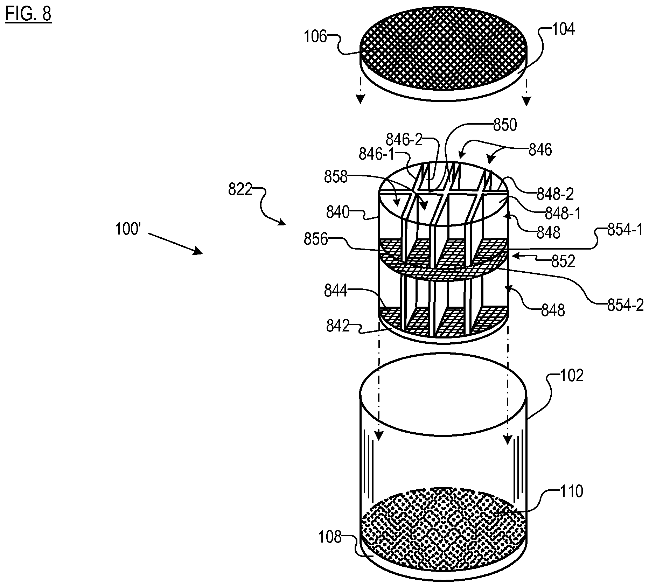

FIG. 8 depicts canister **100'**, which is similar to canister **100** of FIG. 1, but further includes multi-compartment cartridge **822**. Cartridge **822** differs from cartridge **722** in that it provides internal passage ways for conducting ClO₂ gas out of the cartridge.

Canister **100'** includes body **102**, upper lid **104** comprising mesh **106**, and lower lid **108** comprising mesh **110**. Cartridge **822** comprises body **840**, a plurality of "vertical" partitions **846** and **848**, horizontal partition **852**, lower lid **842**, and an upper lid, which is not depicted for clarity. A plurality of compartments **858** are defined within cartridge **822** by vertical **846**, **848** and horizontal **852** partitions, body **840** and the upper or lower lid.

Each vertical partition is defined by two spaced-apart vertical walls. For example, walls **846-1** and **846-2** define one of the vertical partitions **846**. Similarly, walls **848-1** and **848-2** define vertical partition **848**. The vertical partition **848** bi-sects cylindrical body **840** of cartridge **822**. Vertical partitions **846** extend laterally from vertical partition **848**. The spaced-apart walls of the vertical partitions define passageways **850**. These passageways receive at least a portion of the ClO₂ gas that is generated within compartments **858** when solvent reacts with CDG composition. Although not depicted as such for clarity, all vertical partitions are porous (*e*.*g*., comprise mesh, *etc*.) so that ClO₂ gas that is generated or solvent that enters the canister is able to flow into or out of passageways **850**. In some embodiments, body **840** is porous (*e*.*g*., comprises mesh, *etc*.).

Horizontal partition **852** comprises two spaced-apart horizontal "floors," such as floors **854-1** and **854-2**, extending laterally from wall **848-1** of vertical partition **848**. Two identical floors (not depicted) extend from wall **848-2** of partition **848**, thereby creating another horizontal partition (not depicted) on the obscured side of vertical partition **848**. The spaced-apart walls of the horizontal partitions define passageways **856**. These passageways receive at least a portion of the ClO₂ gas that is generated within compartments **858** when solvent reacts with CDG composition. As depicted, horizontal floors **854-1** and **854-2** are porous (e.g., comprise mesh, *etc*.) thereby permitting ClO₂ or solvent to flow into or out of passageways **856**.

The release of ClO₂ can be delayed by an amount of time in the range of about 5 minutes to several hours, as function of the CDG composition, mesh size, and the quantity of water vapor/water/solvent. Furthermore, the profile of the release - immediate or sustained-can be varied based on the aforementioned factors. When desiccants are added to the canister, release of ClO₂ gas can be further delayed for up to several months.

When a canister is fully immersed in liquid water/solvent, there is a reduced ability to control the delay and release profile. Adding a hydrophobic compound, such as certain cellulosic compounds (*e*.*g*., propylcellulose, *etc*.), to the CDG composition can delay the release of ClO₂ to some extent.

*Generating Chlorine Dioxide Gas for Release.* The configurations provided by canisters **100** and **200** are particularly well suited for the production of chlorine dioxide gas, such as for introduction into a closed environment, *etc*. Specifically, either of these canisters is placed in a small amount of liquid solvent (*e*.*g*., water, *etc*.), such that the lower lid (*e*.*g*., lower lid **108** of canister **100**, *etc*.) is in contact with liquid water but the upper lid remains above it. As the solvent enters the canister through the mesh of the lower lid and is exposed to the CDG composition within, ClO₂ gas is generated. This gas exits the canister through the mesh of the upper lid (*e*.*g*., mesh **106** of upper lid **104**, *etc*.).

*Generating Chlorine Dioxide Liquid for Release.* Any of the canisters **100** through **400** can be dropped into liquid water/solvents for the production of chlorine dioxide solutions.

*Contact Time.* In order to generate high quality and highly converted ClO₂, the reactants (*i*.*e*., alkali chlorite salt and solid acid) require a relatively high local concentration and relatively long contact time. In particular, if a gram of chlorite and solid acid is immersed in one liter of water, the composition disperses and little or no chlorine dioxide is generated. The reason for this is the dispersal of the composition results in a low local concentration and low contact time for the chlorite and acid. The canisters disclosed herein promote high local concentration and a sufficiently long contact time, since no dispersal of the reactants occurs.

### Examples

*Example 1.* A CDG composition (granular form) was prepared and then dried at 90-150 °C. Moisture content <1% by weight. The CDG composition included (wt. %):
   Sodium Chlorite 35%
   Sodium hydrogen sulfate anhydrous 40%
   Methyl hydroxy propyl methylcellulose 15%
   Sodium Poly-Acrylate 10%
      - 2 grams of the CDG composition was placed inside canister **100** and then the canister was capped. When the canister was placed in one liter of water, 190 ppm of free ClO₂ was rapidly generated in solution, as measured by UV spectrophotometer at 360 nm. The pH of the ClO₂ solution was 6.4.
      - 2 grams of the CDG composition was placed inside canister **100.** When the canister was immersed in 1 liter of 10% ethanol solution, 172 ppm of free ClO₂ was rapidly generated in solution, as measured by UV spectrophotometer at 360 nm.
      - 2 grams of the CDG composition was placed inside canister **100**. When the canister was immersed in 1 liter of 10% isopropyl solution, 160 ppm of free ClO₂ was rapidly generated in solution, as measured by UV spectrophotometer at 360 nm.
      - 2 grams of the CDG composition was placed inside canister **100.** The canister was exposed to 5 ml of water. ClO₂ gas was rapidly generated and total yield was about 10 weight percent (based on the CDG composition).
      - 2 grams of the CDG composition was placed inside canister **100**. The canister was exposed to ambient humidity. ClO₂ gas was slowly generated with sustained release over 12 days (at 1-10 wppm in the space).
*Example 2.* A CDG composition including anionic surfactants was prepared and then dried at 90-150 °C. The CDG composition included (wt. %):
   Sodium Chlorite 35%
   Sodium hydrogen sulfate anhydrous 40%
   Methyl hydroxy propyl methylcellulose 13%
   Sodium Poly Acrylate 10%
   Sodium Lauryl Sulfate (SLS or SDS) 2%
      - 2 grams of the CDG composition was placed inside canister 100 and then the canister was capped. When the canister was placed in one liter of water, a soapy solution containing 186 ppm of free ClO₂ was rapidly generated, as measured by UV spectrophotometer at 360 nm. The pH of the ClO₂ solution was 6.5.

The CDG compositions of Examples 1 and 2 were formulated to be stable for at least 2 to 3 days when exposed to ambient conditions.

The total amount of water super absorbent/cellulose/desiccant for each Example, as a weight percentage of the CDG composition, is as follows:

### Example 1 : 25

### Example 2: 23

It was observed that when the hydrophilic compounds (i.e. , water super absorbent compounds or cellulose) were increased to 30 weight percent in the CDG composition, ClO₂ release was delayed for about 10 to 12 days. The trend is consistent with theory; a relatively longer delay to the onset of chlorine dioxide generation is achieved by increasing the amount of super absorbents and other hydrophilic compounds in the CDG composition. Those skilled in the art will be able to use simple experimentation to determine an appropriate amount of these compounds to achieve a desired delay time for a given canister configuration (e.g., mesh size, internals layout, form factor, etc.).

## Claims

1. A chlorine-dioxide-generating composition comprising:
(i) an alkali metal chlorite salt in an amount in a range of 1 to 80 weight percent;
(ii) a solid acid source in an amount in a range of 2 to 80 weight percent;
(iii) hydrophilic cellulose in an amount in a range of 7 to 50 weight percent; and
(iv) a super absorbent compound in an amount of 8 to 50 weight percent.

2. The composition of claim 1 further comprising a desiccant wherein the alkali metal chlorite salt is present in an amount in a range of 20 to 35 weight percent, the solid acid source is present in an amount in a range of 25 to 40 weight percent, and the cellulose and super absorbent compound and desiccant are present in a combined amount in a range of 25 to 55 weight percent of the composition.

3. The composition of claim 1 wherein the total amount of the hydrophilic cellulose, the super absorbent compound, and any desiccant present in the composition is greater than 15 weight percent, and wherein the amount of desiccant in the composition can be zero.

4. The composition of claim 1 wherein the super absorbent comprises sodium polyacrylate having a weight average molecular weight of at least 5000 grams/mol.

5. The composition of claim 1 wherein the super absorbent compound comprises sodium polyacrylamide having a weight average molecular weight of at least 400 grams/mol.

6. The composition of claim 1 further comprising a surfactant.

7. The composition of claim 1 further comprising a hydrophobic compound.

8. A canister which contains a composition as claimed in claim 1, wherein the canister comprises at least one porous region that is **characterized by** a size in the range of 0.853 mm (20 mesh) to 0.044 mm (325 mesh).

9. The canister of claim 8 and further wherein the canister comprises a non-flexible material.

10. The canister of claim 8 and further wherein the porous region is **characterized by** a size in the range of 0.422 mm (40 mesh) to 0.152 mm (100 mesh).

11. The canister of claim 8 and further wherein the canister has a lower surface and an upper surface, and wherein the at least one porous region comprises a first porous region and a second porous region, and further wherein the lower surface includes the first porous region and the upper surface includes the second porous region.

12. The canister of claim 8 and further wherein the canister comprises a plurality of internal compartments.

13. The canister of claim 12 and further wherein the chlorine-dioxide-generating composition is apportioned among the plurality of internal compartments.

14. The canister of claim 12 and further wherein the chlorine-dioxide-generating composition is disposed in some of the internal compartments and a desiccant is disposed in other of the internal compartments.

15. The canister of claim 13, wherein the canister comprises a first porous region and a second porous region that:
(a) each place an exterior of the canister in fluidic communication with an interior of the canister;
(b) are **characterized by** a size in a range of 0.853 mm (20 mesh) to 0.044 mm (325 mesh);
(c) are suitably distanced and configured with respect to one another to receive a liquid solvent at the first porous region but not at the second porous region when the canister is placed in an amount of liquid solvent suitable for promoting the generation of chlorine dioxide when the chlorine-dioxide-generating composition is exposed to the solvent.

16. A method comprising:
preparing a chlorine-dioxide-generating composition, wherein the composition comprises:
(i) an alkali metal chlorite salt in an amount In a range of 1 to 80 weight percent;
(ii) a solid acid source in an amount in a range of 2 to 80 weight percent;
(iii) hydrophilic cellulose in an amount in a range of 7 to 50 weight percent;
(iv) a super absorbent compound in an amount in a range of 8 to 50 weight percent; and
adding the chlorine-dioxide generating composition to a canister, wherein the canister comprises a first porous region and a second porous region that:
(a) each place an exterior of the canister in fluidic communication with an interior of the canister; and
(b) are **characterized by** a size in a range of 0.853 mm (20 mesh) to 0.044 mm (325 mesh).

17. The method of claim 16 and further comprising the operation of exposing the canister to a solvent, thereby exposing the chlorine-dioxide-generating composition to the solvent, wherein the chlorine-dioxide-generating generates chlorine dioxide when exposed to the solvent.

18. The method of claim 17 wherein the solvent is a vapor or gas.

19. The method of claim 17 wherein the solvent is a liquid.

20. The method of claim 19 and further comprising the operation of exposing the first porous region but not the second porous region to the liquid solvent.

21. The method of claim 19 and further comprising submerging the canister in the liquid solvent.

## Patentansprüche

1. Chlordioxid erzeugende Zusammensetzung, umfassend:
(i) ein Alkalimetallchlorit-Salz in einer Menge in einem Bereich von 1 bis 80 Gewichtsprozent;
(ii) einen Ausgangsstoff einer festen Säure in einer Menge in einem Bereich von 2 bis 80 Gewichtsprozent;
(iii) hydrophile Cellulose in einer Menge in einem Bereich von 7 bis 50 Gewichtsprozent; und
(iv) eine superabsorbierende Verbindung in einer Menge von 8 bis 50 Gewichtsprozent.

2. Zusammensetzung nach Anspruch 1, ferner umfassend ein Sikkativ, wobei das Alkalimetallchlorit-Salz in einer Menge in einem Bereich von 20 bis 35 Gewichtsprozent vorliegt, der Ausgangsstoff einer festen Säure in einer Menge in einem Bereich von 25 bis 40 Gewichtsprozent vorliegt und die Cellulose und superabsorbierende Verbindung und Sikkativ in einer vereinigten Menge in einem Bereich von 25 bis 55 Gewichtsprozent der Zusammensetzung vorliegen.

3. Zusammensetzung nach Anspruch 1, wobei die Gesamtmenge der hydrophilen Cellulose, der superabsorbierenden Verbindung und jeglichen Sikkativs, das in der Zusammensetzung vorliegt, größer ist als 15 Gewichtsprozent, und wobei die Menge des Sikkativs in der Zusammensetzung Null betragen kann.

4. Zusammensetzung nach Anspruch 1, wobei das Super-Absorptionsmittel Natriumpolyacrylat umfasst, das ein massegemitteltes Molekulargewicht von mindestens 5.000 g/mol aufweist.

5. Zusammensetzung nach Anspruch 1, wobei die superabsorbierende Verbindung Natriumpolyacrylat umfasst, das ein massegemitteltes Molekulargewicht von mindestens 400 g/mol aufweist.

6. Zusammensetzung nach Anspruch 1, die ein Tensid umfasst.

7. Zusammensetzung nach Anspruch 1, die ferner eine hydrophobe Verbindung umfasst.

8. Kanister, der eine Zusammensetzung nach Anspruch 1 enthält, wobei der Kanister mindestens einen porösen Bereich umfasst, der durch eine Weite im Bereich von 0,853 mm (20 Mesh) bis 0,044 mm (325 Mesh) gekennzeichnet ist.

9. Kanister nach Anspruch 8, und wobei der Kanister ein nicht flexibles Material aufweist.

10. Kanister nach Anspruch 8, und wobei ferner der poröse Bereich durch eine Weite im Bereich von 0,422 mm (40 Mesh) bis 0,152 mm (100 Mesh) gekennzeichnet ist.

11. Kanister nach Anspruch 8, und wobei ferner der Kanister eine untere Oberfläche und eine obere Oberfläche aufweist und wobei der mindestens eine poröse Bereich einen ersten porösen Bereich und einen zweiten porösen Bereich umfasst und wobei ferner die untere Oberfläche den ersten porösen Bereich einschließt und die obere Oberfläche den zweiten porösen Bereich einschließt.

12. Kanister nach Anspruch 8, und wobei ferner der Kanister eine Mehrzahl innerer Kammern umfasst.

13. Kanister nach Anspruch 12, und wobei ferner die Chlordioxid erzeugende Zusammensetzung auf die Mehrzahl von inneren Kammern aufgeteilt ist.

14. Kanister nach Anspruch 12, und wobei ferner die Chlordioxid erzeugende Zusammensetzung in einigen der inneren Kammern angeordnet ist und ein Sikkativ in den anderen der inneren Kammern angeordnet ist.

15. Kanister nach Anspruch 13, wobei der Kanister einen ersten porösen Bereich und einen zweiten porösen Bereich umfasst, die
(a) jeweils ein Äußeres des Kanisters in Fluidverbindung mit einem Inneren des Kanisters bringen;
(b) durch eine Weite in einem Bereich von 0,853 mm (20 Mesh) bis 0,044 mm (325 Mesh) gekennzeichnet sind;
(c) in geeigneter Weise voneinander beabstandet und zueinander konfiguriert sind, um ein flüssiges Lösemittel in dem ersten porösen Bereich, jedoch nicht in dem zweiten porösen Bereich, aufzunehmen, wenn der Kanister in einer Menge flüssigen Lösemittels angeordnet ist, die zur Förderung der Erzeugung von Chlordioxid geeignet ist, wenn die Chlordioxid erzeugende Zusammensetzung gegenüber dem Lösemittel exponiert wird.

16. Verfahren umfassend:
Herstellen einer Chlordioxid erzeugenden Zusammensetzung, wobei die Zusammensetzung umfasst:
(i) ein Alkalimetallchlorit-Salz in einer Menge in einem Bereich von 1 bis 80 Gewichtsprozent;
(ii) einen Ausgangsstoff einer festen Säure in einer Menge in einem Bereich von 2 bis 80 Gewichtsprozent;
(iii) hydrophile Cellulose in einer Menge in einem Bereich von 7 bis 50 Gewichtsprozent; und
(iv) eine superabsorbierende Verbindung in einer Menge von 8 bis 50 Gewichtsprozent; und
Zugeben der Chlordioxid erzeugenden Zusammensetzung zu einem Kanister, wobei der Kanister einen ersten porösen Bereich und einen zweiten porösen Bereich umfasst, die
(a) jeweils ein Äußeres des Kanisters in Fluidverbindung mit einem Inneren des Kanisters bringen; und
(b) durch eine Weite in einem Bereich von 0,853 mm (20 Mesh) bis 0,044 mm (325 Mesh) gekennzeichnet sind.

17. Verfahren nach Anspruch 16, und ferner umfassend den Vorgang des Exponierens des Kanisters gegenüber einem Lösemittel, dadurch Exponieren der Chlordioxid erzeugenden Zusammensetzung gegenüber dem Lösemittel, wobei die Chlordioxid erzeugende Zusammensetzung Chlordioxid erzeugt, wenn sie an dem Lösemittel exponiert wird.

18. Verfahren nach Anspruch 17, wobei das Lösemittel ein Dampf oder Gas ist.

19. Verfahren nach Anspruch 17, wobei das Lösemittel eine Flüssigkeit ist.

20. Verfahren nach Anspruch 19 und ferner umfassend den Vorgang des Exponierens des ersten porösen Bereichs, jedoch nicht des zweiten porösen Bereichs, gegenüber dem flüssigen Lösemittel.

21. Verfahren nach Anspruch 19 und ferner umfassend das Eintauchen des Kanisters in das flüssige Lösungsmittel.

## Revendications

1. Composition générant du dioxyde de chlore, comprenant:
(i) un sel chlorite de métal alcalin en une quantité dans une gamme de 1 à 80 pour cent en poids;
(ii) une source d'acide solide en une quantité dans une gamme de 2 à 80 pour cent en poids;
(iii) de la cellulose hydrophile en une quantité dans une gamme de 7 à 50 pour cent en poids; et
(iv) un composé super absorbant en une quantité de 8 à 50 pour cent en poids.

2. Composition selon la revendication 1 comprenant en outre un déshydratant, dans laquelle le sel chlorite de métal alcalin est présent en une quantité dans une gamme de 20 à 35 pour cent en poids, la source d'acide solide est présente en une quantité dans une gamme de 25 à 40 pour cent en poids, et la cellulose et le composé superabsorbant et le déshydratant sont présents en une quantité combinée dans une gamme de 25 à 55 pour cent en poids de la composition.

3. Composition selon la revendication 1, dans laquelle la quantité totale de la cellulose hydrophile, du composé super absorbant et de tout déshydratant présent dans la composition est supérieure à 15 pour cent en poids, et dans laquelle la quantité de déshydratant dans la composition peut être zéro.

4. Composition selon la revendication 1, dans laquelle le super absorbant comprend un polyacrylate de sodium ayant un poids moléculaire moyen en poids d'au moins 5000 grammes/mole.

5. Composition selon la revendication 1, dans laquelle le composé super absorbant comprend un polyacrylamide de sodium ayant un poids moléculaire moyen en poids d'au moins 400 grammes/mole.

6. Composition selon la revendication 1, comprenant en outre un tensioactif.

7. Composition selon la revendication 1, comprenant en outre un composé hydrophobe.

8. Cartouche qui contient une composition selon la revendication 1, laquelle cartouche comprend au moins une région poreuse qui se **caractérise par** une dimension dans la gamme de 0,853mm (20 mesh) à 0,044mm (325 mesh).

9. Cartouche selon la revendication 8, laquelle cartouche comprend en outre un matériau non flexible.

10. Cartouche selon la revendication 8, dans laquelle en outre la région poreuse se **caractérise par** une dimension dans la gamme de 0,422mm (40 mesh) à 0,152mm (100 mesh).

11. Cartouche selon la revendication 8, laquelle cartouche a en outre une surface inférieure et une surface supérieure, et dans laquelle ladite au moins une région poreuse comprend une première région poreuse et une seconde région poreuse, et dans laquelle en outre la surface inférieure inclut la première région poreuse et la surface supérieure inclut la seconde région poreuse.

12. Cartouche selon la revendication 8, laquelle cartouche comprend en outre une pluralité de compartiments internes.

13. Cartouche selon la revendication 12, dans laquelle en outre la composition générant du dioxyde de chlore est répartie parmi la pluralité de compartiments internes.

14. Cartouche selon la revendication 12, dans laquelle en outre la composition générant du dioxyde de chlore est disposée dans certains des compartiments internes et un déshydratant est disposé dans un autre des compartiments internes.

15. Cartouche selon la revendication 13, laquelle cartouche comprend une première région poreuse et une seconde région poreuse qui:
(a) mettent chacune un extérieur de la cartouche en communication fluidique avec un intérieur de la cartouche;
(b) se caractérisent par une dimension dans une gamme de 0,853mm (20 mesh) à 0,044mm (325 mesh);
(c) sont comme il convient distancées et configurées l'une par rapport à l'autre pour recevoir un solvant liquide à la première région poreuse mais pas à la seconde région poreuse lorsque la cartouche est placée dans une quantité de solvant liquide appropriée pour activer la génération de dioxyde de chlore lorsque la composition générant du dioxyde de chlore est exposée au solvant.

16. Procédé comprenant:
la préparation d'une composition générant du dioxyde de chlore, laquelle composition comprend:
(i) un sel chlorite de métal alcalin en une quantité dans une gamme de 1 à 80 pour cent en poids;
(ii) une source d'acide solide en une quantité dans une gamme de 2 à 80 pour cent en poids;
(iii) de la cellulose hydrophile en une quantité dans une gamme de 7 à 50 pour cent en poids;
(iv) un composé super absorbant en une quantité de 8 à 50 pour cent en poids; et
l'addition de la composition générant du dioxyde de chlore à une cartouche, dans laquelle la cartouche comprend une première région poreuse et une seconde région poreuse qui:
(a) mettent chacune un extérieur de la cartouche en communication fluidique avec un intérieur de la cartouche; et
(b) se caractérisent par une dimension dans une gamme de 0,853mm (20 mesh) à 0,044mm (325 mesh).

17. Procédé selon la revendication 16 et comprenant en outre l'étape consistant à exposer la cartouche à un solvant, exposant ainsi la composition générant du dioxyde de chlore au solvant, dans lequel la composition générant du dioxyde de chlore génère du dioxyde de chlore lorsqu'elle est exposée au solvant.

18. Procédé selon la revendication 17, dans lequel le solvant est une vapeur ou un gaz.

19. Procédé selon la revendication 17, dans lequel le solvant est un liquide.

20. Procédé selon la revendication 19, comprenant en outre l'étape consistant à exposer la première région poreuse mais pas la seconde région poreuse au solvant liquide.

21. Procédé selon la revendication 19, comprenant en outre l'immersion de la cartouche dans le solvant liquide.
